# EUROPEAN PATENT SPECIFICATION

(11) **EP 3 006 778 B1**
(45) Date of publication and mention of the grant of the patent: **01.03.2023**
(21) Application number: 14804300.3
(22) Date of filing: 27.05.2014
(51) Int. Cl.: F16H 57/029, F16H 25/22, F16H 57/031, F16J 15/10, F16J 15/14

(54) **ELECTRIC LINEAR ACTUATOR**
ELEKTRISCHER LINEARANTRIEB
ACTIONNEUR LINÉAIRE ÉLECTRIQUE

(30) Priority: 29.05.2013 JP 2013112629
(43) Date of publication of application: 13.04.2016
(73) Proprietor: NTN Corporation, Osaka-shi, Osaka 550-0003 (JP)
(72) Inventor: FUNADA, Kensuke, Iwata-shi Shizuoka 438-8510 (JP)
(74) Representative: Cohausz & Florack
(86) International application number: PCT/JP2014/064004
(87) International publication number: WO 2014/192760

(56) References cited:
- EP-A1- 2 520 829
- WO-A1-2011/135849
- JP-A- 2005 145 431
- JP-A- 2007 168 613
- JP-A- 2009 243 621
- JP-A- 2011 047 448
- JP-A- 2012 214 090
- JP-U- S63 104 282
- US-A- 4 593 780
- US-A1- 2005 121 251
- US-A1- 2007 187 169
- US-A1- 2011 049 814
- US-A1- 2012 298 439

## Description

### Field of the Invention

The present invention relates to an electric linear actuator provided with a ball screw mechanism used in motors in general industries and driving sections of automobiles etc., and more particularly to an electric linear actuator used in a transmission or a parking brake of automobiles for converting rotary motion from an electric motor to linear motion of a driving shaft via a ball screw mechanism.

### Description of Background Art

It has been generally used gear mechanisms such as a trapezoidal thread worm gear mechanism or a rack and pinion gear mechanism as a mechanism for converting a rotary motion of an electric motor to an axial linear motion in an electric linear actuator used in various kinds of driving sections. These motion converting mechanisms involve sliding contact portions and thus power loss is increased and accordingly size of electric motor and power consumption are increased. Thus, the ball screw mechanisms have been widely used as more efficient actuators.

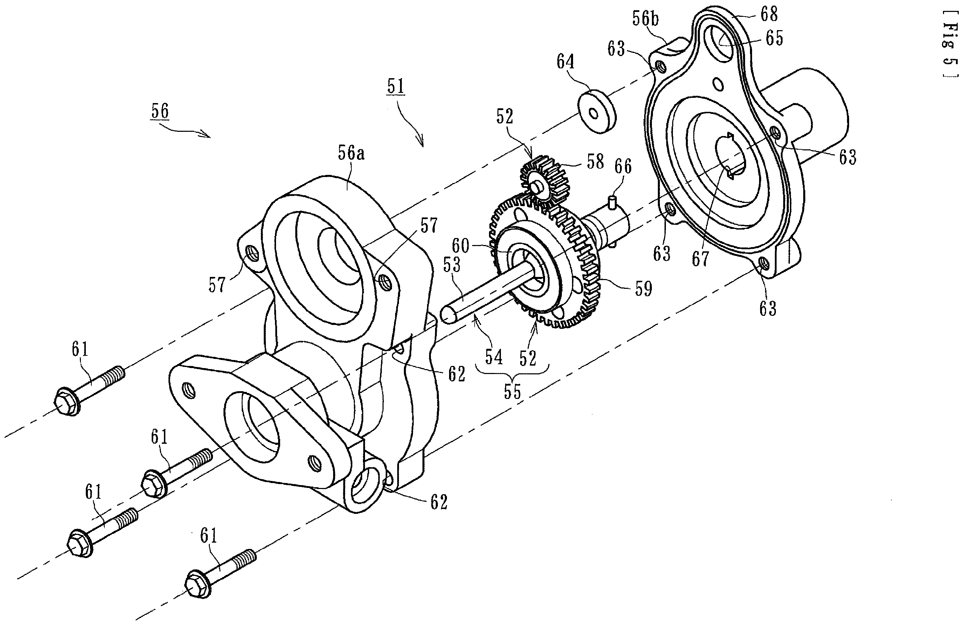

In an electric linear actuator of the prior art, an output member can be axially displaced by rotating a nut forming a ball screw with an electric motor supported on a housing of the actuator and axially driving a ball screw shaft inserted into the nut. An electric linear actuator (power transmitting apparatus) 51 shown in Fig. 5 is a type used for an electric braking apparatus and has a driving power transmitting mechanism 55 comprising a gear mechanism (speed reduction mechanism) 52 for transmitting a rotational power of an electric motor (not shown) to a ball screw mechanism 54 for converting the rotational power to a linear driving power of a ball screw shaft 53.

A housing 56 containing therein the driving power transmitting mechanism 55 including the gear mechanism 52 and the ball screw mechanism 54 comprises a case 56a and a cover 56b and is formed of light metal such as aluminum alloy etc. The case 56a is formed with a plurality of screw apertures 57 for mounting the electric motor to the driving power transmitting mechanism 55.

The gear mechanism 52 comprises a pinion gear (not shown) secured on an output shaft of the electric motor, an idler gear 58 mated with the pinion gear and a ring gear 59 mated with the idler gear 58.

The ball screw mechanism 54 comprises a nut 60 rotated by the rotational driving power from the electric motor through the gear mechanism 52, and a ball screw shaft 53 axially moved by the nut 60 through balls (not shown) rollably arranged between screw grooves of the nut 60 and the ball screw shaft 53.

The case 56a and cover 56b are separably structured and a plurality of through apertures 62 through which bolts 61 are passed are formed on the case 56a and a plurality of threaded apertures 63 to which the bolts 61 are screwed are formed on the cover 56b at positions corresponding to the through apertures 62. Thus the case 56a and cover 56b can be united by inserting the bolts 61 through the apertures 62 and fastening them to the threaded apertures 63.

A bearing 64 for rotationally supporting a tip end of an output shaft of the electric motor is mounted in a bore 65 formed on the top of the cover 56b. A pin 66 for preventing rotation of the ball screw shaft 53 is vertically mounted on the ball screw shaft 53 so that the pin 66 can be received in a slide groove 67 and linearly guide the ball screw shaft 53 along the slide groove 67.

### Document of the Prior Art

### Patent Document

Patent Document 1: JP 2012 - 214090 A. The document US 2005/121251 describes an electric power steering apparatus comprising a motor connected via a gearing transmission and a nut to a male screw portion of a rack shaft.

### Disclosure of the Invention

### Problems to be solved by the Invention

In the electric linear actuator 51 of the prior art, the gear mechanism 52 and the ball screw mechanism 54 are contained within a two-piece type housing 56 and the rotational power of the electric motor mounted outside the housing 56 is transmitted to the ball screw mechanism 54 via the gear mechanism 52 and converted to the linear motion of the ball screw shaft 53.

In the electric linear actuator 51, since the motor shaft and the gear mechanism 52 are connected via the idler gear 58, it is possible to reduce the diameter of the gear mechanism 52. However, for achieving a most compact configuration of the housing 56 it cannot help adopting an outline configuration of the housing 56 so that it has a pear-like shape with partially projecting the top portion of the cover 56b.

In such an electric linear actuator 51, driving parts such as the ball screw mechanism 54 are contained within the housing 56 to prevent entering of muddy water or oil into the driving parts or scattering of lubricant grease to the outside. The housing 56 should have sufficient strength and durability to withstand load applied from the driving parts and to prevent deformation of abutment surfaces or fitting surfaces between the casing 56a and cover 56b caused by reaction force of the nut 60 against propelling force of the ball screw mechanism 54. In this case, since the configuration of the fitting surfaces of the case 56a and the cover 56b is noncircular (i.e. pear-like configuration), it causes uneven stress therebetween and accordingly impairs sealability of the housing 56.

For reducing manufacturing cost of the electric linear actuator 51, it is preferable to omit the idler gear 58 and fastening bolts 61. However, omission of the idler gear 58 will bring enlargement of the diameter of the gear mechanism 52 and omission of the bolts 61 will impair the sealability of the housing 56.

It is, therefore, an object of the present invention to provide an electric linear actuator intended to improve the sealability of the housing and the durability of the actuator with increasing the strength against the load by changing the cross-sectional configuration of the two-piece housing from a noncircular configuration to a circular configuration.

### Means for solving the Problems

For achieving the object of the present invention, there is provided a belt speed reducing apparatus according to claim 1.

According to the present invention of claim 1, since the electric linear actuator of the present invention comprises a speed reduction mechanism for reducing the rotational speed of the electric motor and transmitting the rotational power of the electric motor to a ball screw mechanism for converting the rotational motion of the electric motor to the axial linear motion of a driving shaft; the ball screw mechanism comprising a nut formed with a helical screw groove on its inner circumference and supported by rolling bearings mounted on the housing rotationally but axially immovably; and a screw shaft coaxially integrated with the driving shaft, formed with helical screw groove on its outer circumference corresponding to the helical screw groove of the nut, inserted into the nut via a large number of balls, and supported axially movably but not rotationally relative to the housing and is characterized in that the housing comprises a first housing on which the electric motor is mounted and a second housing to be abutted against an end face of the first housing, that the first housing is formed with a cylindrical gear containing portion for containing the speed reduction mechanism, that part of an end of the gear containing portion of the first housing extends radially inward to form a bottom portion for covering the speed reduction mechanism, and that the bottom portion of the first housing and the second housing are formed with abutment surfaces respectively, it is possible to provide an electric linear actuator which can reduce areas of both openings of the first and second housings and thus improve the sealability and the rigidity and the strength of the housing. In addition, it is possible to reduce amount of sealing agent and to improve the durability of the electric linear actuator.

The abutment surfaces respectively of the first and second housings is formed to have a circular configuration. This makes it possible to evenly unite the two-piece housing by fastening bolts with suppressing deformation of the housing and thus to improve the sealability of the housing as well as durability with increasing the strength and rigidity.

It is also preferable as defined in claim 2 that at least one of the abutment surfaces of the first and second housings is formed with an annular sealing groove, and that a sealing member is interposed between the abutment surfaces of the housing.

It is preferable as defined in claim 3 or 4 that the sealing member may be a liquid gasket formed of curable material or an O-ring.

It is preferable as defined in claim 5 that the first housing and the second housing are united each other by a plurality of fastening bolts, that a plurality of securing portions formed with bolt apertures through which the fastening bolts are passed are formed on the housing with being partially projected from the periphery of the housing, and that the bolt apertures are arranged equidistantly along the periphery of the housing. This makes it possible to evenly fasten the securing bolts along the periphery of the first and second housings and thus to improve the sealability of the housing with suppressing deformation of the first and second housings.

It is also preferable as defined in claim 6 that at least the second housing of the first and second housings is formed with ribs each extending over a region from the securing portion to a cylindrical portion of the second housing for containing the screw shaft. This makes it possible to increase the strength and rigidity of the housing while reducing its weight and accordingly its durability and to prevent deformation of the housing and thus to improve its sealability.

### Effects of the Invention

According to an electric linear actuator of the present invention, since it comprises a housing; an electric motor mounted on the housing; and a speed reduction mechanism for reducing the rotational speed of the electric motor and transmitting the rotational power of the electric motor to a ball screw mechanism for converting the rotational motion of the electric motor to the axial linear motion of a driving shaft; the ball screw mechanism comprising a nut formed with a helical screw groove on its inner circumference and supported by rolling bearings mounted on the housing rotationally but axially immovably; and a screw shaft coaxially integrated with the driving shaft, formed with helical screw groove on its outer circumference corresponding to the helical screw groove of the nut, inserted into the nut via a large number of balls, and supported axially movably but not rotationally relative to the housing and is characterized in that the housing comprises a first housing on which the electric motor is mounted and a second housing to be abutted against an end face of the first housing, that the first housing is formed with a cylindrical gear containing portion for containing the speed reduction mechanism, that part of an end of the gear containing portion of the first housing extends radially inward to form a bottom portion for covering the speed reduction mechanism, and that the bottom portion of the first housing and the second housing are formed with abutment surfaces respectively, it is possible to provide an electric linear actuator which can reduce areas of both openings of the first and second housings and thus improve the sealability and the rigidity and the strength of the housing. In addition, it is possible to reduce amount of sealing agent and to improve the durability of the electric linear actuator.

### Brief description of the Drawings

[Fig. 1] A longitudinal section view showing one preferable embodiment of an electric linear actuator of the present invention;
[Fig. 2] A longitudinal section view showing an actuator main body of Fig. 1;
[Fig. 3(a)] A front elevation view showing a second housing of Fig. 1 taken from a line III-III of Fig. 3(b);
[Fig. 3(b)] A longitudinal section view showing a housing of Fig. 1;
[Fig. 4(a)] A partially enlarged view showing a fitting portion of the housing of Fig. 3(b);
[Fig. 4(b)] A partially enlarged view showing a modification of Fig. 4(a); and
[Fig. 5] An exploded perspective view showing an electric linear actuator of the prior art.

### Embodiment

One preferred embodiment and its modification of the present invention will be hereinafter described with reference to the drawings.

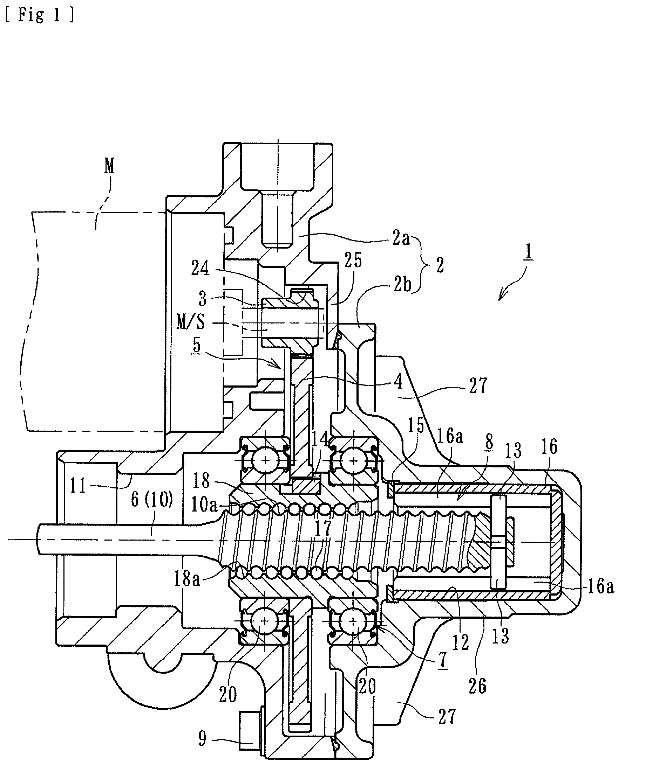

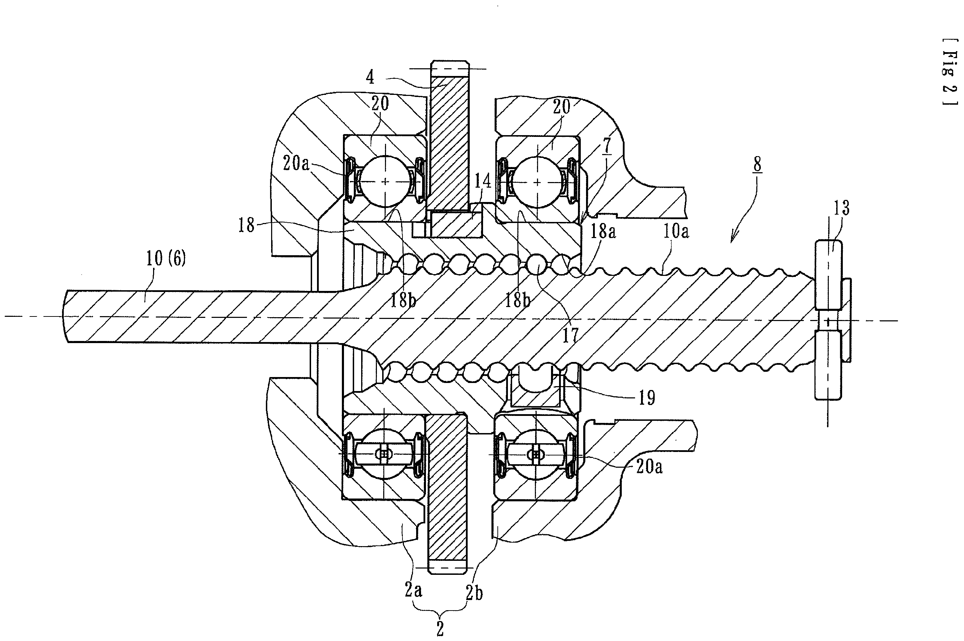

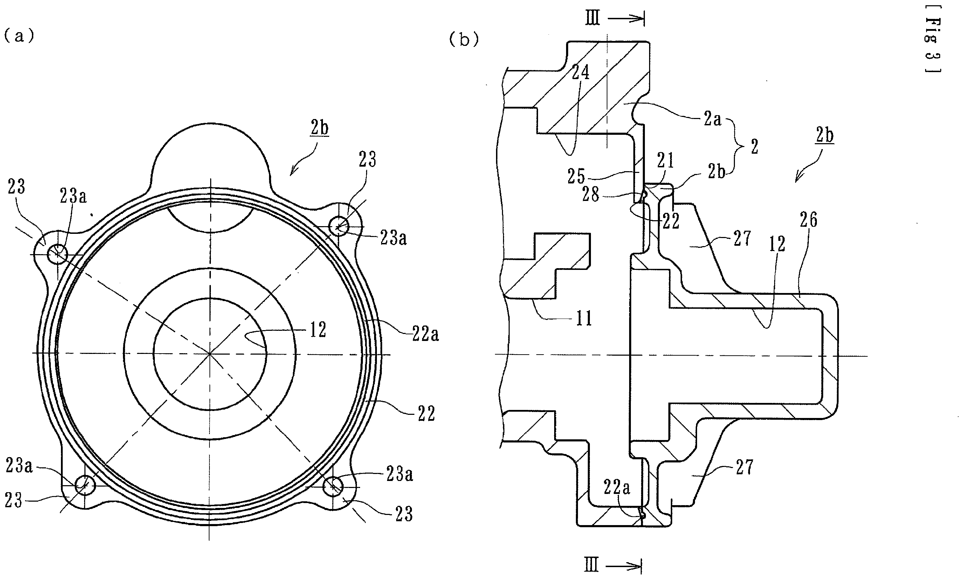

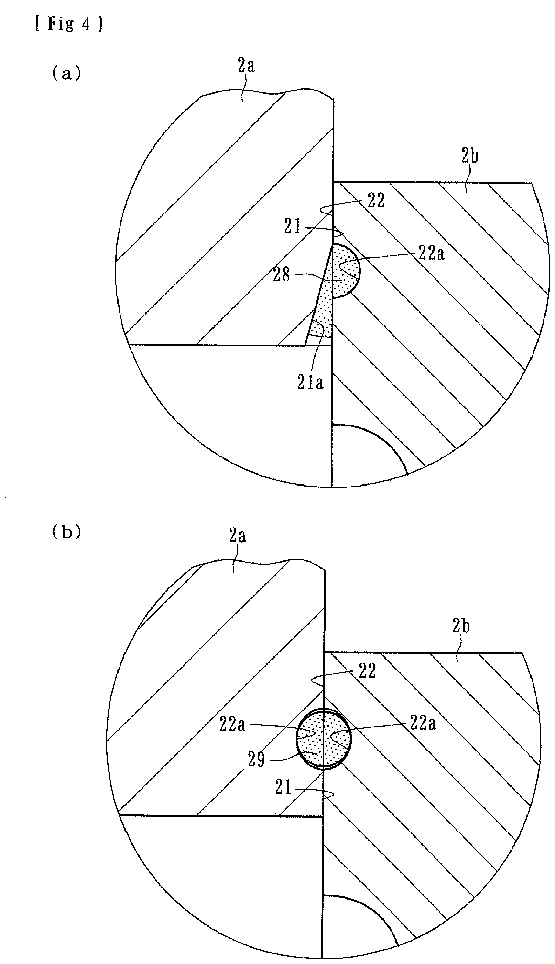

Fig. 1 is a longitudinal section view showing one preferable embodiment of an electric linear actuator of the present invention, Fig. 2 is a longitudinal section view showing an actuator main body of Fig. 1, Fig. 3(a) is a front elevation view showing a second housing of Fig. 1 taken from a line III-III of Fig. 3(b), Fig. 3(b) is a longitudinal section view showing a housing of Fig. 1, Fig. 4(a) is a partially enlarged view showing a fitting portion of the housing of Fig. 3(b), and Fig. 4(b) is a partially enlarged view showing a modification of Fig. 4(a).

As shown in Fig. 1, the electric linear actuator 1 comprises a housing 2, an electric motor M mounted on the housing 2, a speed reduction mechanism 5 comprising an input gear 3 mounted on a motor shaft M/S of the electric motor M and an output gear 4 mating with the input gear 3, a ball screw mechanism 7 for converting rotational motion of the electric motor M to axial linear motion of a driving shaft 6, and an actuator main body 8 including the ball screw mechanism 7.

The housing 2 comprises a first housing 2a and a second housing 2b abutted with and integrally fastened each other by fastening bolts 9. The electric motor M is mounted on the first housing 2a and a through bore 11 and a blind bore 12 for containing a screw shaft 10 are formed in the first and second housings 2a, 2b respectively.

The housing 2 is formed of aluminum alloy such as A 6061, ADC 12 etc. by die casting. Then the housing 2 is treated by a so-called precipitation hardening treatment comprising a series of heat treatments such as solution heat treatment, for forming solid solution by high temperature heating, quenching treatment by rapidly cooling the solution heat treated housing, then age-hardening treatment (tempering treatment) for precipitation by holding at the room temperature or heating at a low temperature (100 to 200°C) to cause large lattice distortion in the precipitated phase. Such a precipitation hardening treatment enables to improve the mass productivity and reduce the manufacturing cost and the weight of the housing 2 with increasing its strength and reducing amount of aluminum consumption.

The input gear 3 formed as a spur gear is press-fitted onto the end of the motor shaft M/S of the electric motor M not rotationally and the output gear 4 mating with the input gear 3 is integrally secured on a nut 18 forming part of the ball screw mechanism 7 via a key 14.

The driving shaft 6 is integrally formed with a screw shaft 10 forming part of the ball screw mechanism 7. Guide pins 13, 13 are mounted on one end (right-side end of Fig. 1) of the driving shaft 6. A guide member 16 is mounted in the blind bore 12 of the second housing 2b and is formed with axially extending guide grooves 16a, 16a with which the guide pins 13,13 are engage so that the screw shaft 10 can be axially moved but not rotated. Falling-out of the screw shaft 10 can be prevented by abutment of the pins 13, 13 against a stopper ring 15 mounted on the second housing 2b.

The guide member 16 is formed of sheet or pipe members of blister steel such as SCr 420 or SCM 415 etc. by plastic working them, more particularly by press working pipe members and the surface of the guide member 16 is hardened by carburizing quenching as having its surface hardness of 50 to 64 HRC. This makes it possible to prevent wear of the guide member 16 for a long term and thus improve its durability. The guide member 16 can be made of other materials than those described above, for example, of blister steel such as SCM 440, cold rolled steel sheet (JIS SPCC system) or carbon steel such as S45C. When using cold rolled steel or carbon steel, it is preferable that they are high frequency hardened as having their surface of 50 to 64 HRC.

As shown in the enlarged view of Fig. 2, the ball screw mechanism 7 comprises the screw shaft 10 and the nut 18 inserted on the screw shaft 10 via balls 17. The screw shaft 10 is formed on its outer circumference with a helical screw groove 10a and supported axially movably but not rotationally. On the other hand, the nut 18 is formed on its inner circumference with screw groove 18a corresponding to the screw groove 10a of the screw shaft 10 and a plurality of balls 17 are rollably contained between the screw grooves 10a, 18a. The nut 18 is supported by two supporting bearings 20, 20 rotationally but axially immovably relative to the first and second housings 2a, 2b. A numeral 19 denotes a bridge member for achieving an endless circulating passage of balls 17 through the screw groove 18a of the nut 18.

The cross-sectional configuration of each screw groove 10a, 18a may be either one of circular-arc or Gothic-arc configuration. However, the Gothic-arc configuration is adopted in this embodiment since it can have a large contacting angle with the ball 17 and set a small axial gap. This enables to have large rigidity against the axial load and thus to suppress generation of vibration.

The nut 18 is formed of case hardened steel such as SCM 415 or SCM 420 and its surface is hardened to HRC 55 to 62 by vacuum carburizing hardening. This enables to omit treatments such as buffing for scale removal after heat treatment and thus to reduce the manufacturing cost. On the other hand, the screw shaft 10 is formed of medium carbon steel such as S55C or case hardened steel such as SCM 415 or SCM 420 and its surface is hardened to HRC 55 to 62 by induction hardening or carburizing hardening.

The output gear 4 forming part of the speed reduction mechanism 5 is firmly secured on the outer circumference 18b of the nut 18 via a key 14 and the support bearings 20, 20 are press-fitted onto the nut via a predetermined interface at both sides of the output gear 4. This enables to prevent both the supporting bearings 20, 20 and output gear 4 from being axially shifted although strong thrust load would be applied to them from the driving shaft 6. Each supporting bearing 20 comprises a deep groove ball bearing on both sides of which is mounted shield plates 20a, 20a for preventing lubricating grease sealed within the bearing body from being leaked outside and abrasive debris from being entered into the bearing body from outside.

In the illustrated embodiment, since both the supporting bearings 20, 20 are formed by deep groove ball bearing having same specifications, it is possible to support both a thrust load applied from the driving shaft 6 and a radial load applied from the output gear 4 and also to simplify confirmation work to prevent error in assembly of the bearing and thus to improve the assembling operability. In this case, the term "same specifications" means that the deep groove ball bearings have same inner diameters, outer diameters, width dimensions, rolling element sizes, rolling element numbers and internal clearances.

As shown in the enlarged view of Fig. 3(a), each of the abutment surfaces 21, 22 respectively of the first and second housings 2a, 2b is formed as having a substantially circular configuration. In addition, a plurality (four in the illustrated embodiment) of securing portions 23 formed with bolt apertures 23a through which the fastening bolts 9 are passed are formed on the housing 2a or 2b with being partially projected from the periphery of the housing 2a or 2b, and the bolt apertures 23a are arranged equidistantly (90°angular distance in the illustrated embodiment) along the periphery of the housing 2a or 2b. This makes it possible to evenly fasten the securing bolts 9 along the periphery of the first and second housings 2a, 2b and thus to improve the sealability of the housing 2 with suppressing deformation of the first and second housings 2a, 2b. In this specification the term "substantially circular" means that at least the abutment surfaces 21, 22 on which sealing agent 28 (Fig. 4(a)) is applied are circular and abutment surfaces 21, 22 having e.g. partial flanges or rectangular or noncircular mounting portions on their periphery are included.

As shown in Fig. 3(b), the first housing 2a is formed with a cylindrical gear containing portion 24 for containing the input gear 3 of the speed reduction mechanism 5 and part of an end of the gear containing portion 24 of the first housing 2a extends radially inward to form a bottom portion 25 for covering the speed reduction mechanism 5. According to the present invention, since the speed reduction mechanism 5 comprises only the input gear 3 and the output gear 4 with an idler gear of the prior art being omitted therefrom and the bottom portion 25 formed on the gear containing portion 24 of the first housing 2a is formed with the abutment surface 21, it is possible to make both the abutment surfaces 21, 22 of the first and second housings 2a, 2b substantially circular. This makes it possible to reduce the area of the first housing 2a and accordingly to improve the sealability of the housing 2, to increase its strength and rigidity and additionally to reduce amount of sealing agent. Furthermore, the substantially circular abutment surfaces 21, 22 enable the two-piece housing 2 to be evenly fastened with suppressing its deformation. In addition, the provision of the gear containing portion 24 and its bottom portion 25 increases the axial dimension of the first housing 2a and thus improves its strength and rigidity.

In addition, at least one of the first and second housings 2a, 2b (the second housing (2b) in the illustrated embodiment) is formed with ribs 27 each extending over a region from the securing portion 23 to a cylindrical portion 26 of the second housing 2b for containing the screw shaft 10.

Each of the ribs 27 has a circular arc configuration gradually reducing its radius and inclination from the securing portion 23 to the cylindrical portion 26.
This makes it possible to increase the strength and rigidity of the housing, especially its weakest cylindrical portion 26 while reducing its weight and accordingly its durability and to prevent deformation of the housing 2 and thus to improve its sealability.

As shown in an enlarged view of Fig. 4(a), according to the present invention, a tapered chamfer portion 21a is formed on the abutment surface 21 of the first housing 2a and an annular sealing groove 22a having a substantially semi-circular cross-section is formed on the abutment surface 22 of the second housing 2b and sealing agent 28 is filled in a space between the chamfered portion 21a and the annular groove 22a. The sealing agent 28 is a liquid gasket formed of curable material and its volume is larger than a volume of the annular sealing groove 22a and smaller than a volume of an annular space formed by the chamfered portion 21a and the sealing groove 22a. That is, excess of the sealing agent 28 protruded from the sealing groove 22a is filled within the space of the chamfered portion 21a. Thus it is possible to prevent the sealing agent 28 from being protruded outside from the abutment surfaces 21, 22 and also prevent falling of excess of sealing agent 28.

The sealing agent 28 may be formed of e.g. liquid gasket (packing) of solventless silicone or synthetic rubber. Since such a curable material of liquid gasket can be cured after the lapse of a predetermined time, sufficient sealability can be attained after about 24 hours. The provision of the annular sealing groove 22a of a semi-circular cross-section and the tapered chamfer portion 21a enables to effectively prevent falling of protruded sealing agent 28 by a simple way.

Although it is shown liquid gasket as an example of the sealing agent, it is possible to form annular grooves 22a, 22a each having a semi-circular cross-section and mount therein sealing member 29 such as an O-ring of synthetic resin as shown in Fig. 4(b). Alternately although not shown, it is possible to interpose between the O-ring and the annular grooves 22a, 22a a metal gasket of copper, stainless steel or aluminum alloy, a semi-metal gasket of inorganic cushioning material covered by metal thin sheet or a sheet gasket of synthetic rubber or fluororesin.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims.

### Applicability in Industries

The electric linear actuator of the present invention can be used to electric motors for a general industry use, driving portions of an automobile etc. and applied to an actuator provided with a ball screw mechanism for converting a rotational input motion from an electric motor to a linear motion of a driving shaft.

### Description of Reference numerals

- 1: electric linear actuator
- 2: housing
- 2a: first housing
- 2b: second housing
- 3: input gear
- 4: output gear
- 5: speed reduction mechanism
- 6: driving shaft
- 7: ball screw mechanism
- 8: actuator main body
- 9: securing bolt
- 10: screw shaft
- 10a, 18a: screw groove
- 11: through bore
- 12: blind bore
- 13: guide pin
- 14: key
- 15: stopper ring
- 16: guide member
- 16a: guide groove
- 17: ball
- 18: nut
- 18b: outer circumference of nut
- 19: bridge member
- 20: supporting bearing
- 20a: shield plate
- 21, 22: abutment surface
- 21a: chamfered portion
- 22a: sealing groove
- 23: securing portion
- 23a: bolt aperture
- 24: gear containing portion
- 25: bottom portion
- 26: cylindrical portion
- 27: rib
- 28, 29: sealing agent (sealing member)
- 51: driving power transmitting portion
- 52: gear mechanism
- 53: ball screw shaft
- 54: ball screw mechanism
- 55: driving power transmitting mechanism
- 56: housing
- 56a: casing
- 56b: cover
- 57: screw aperture
- 58: idler gear
- 59: ring gear
- 60: nut
- 61: bolt
- 62: through aperture
- 63: screw aperture for case mount
- 64: bearing
- 65: bore
- 66: pin
- 67: slide groove
- 68: projected portion
- M: electric motor
- M/S: motor shaft

## Claims

1. An electric linear actuator (1) comprising:
a housing [2];
an electric motor (M) mounted on the housing (2), the electric motor (M) including a shaft (M/S); and
a speed reduction mechanism (5) for reducing the rotational speed of the electric motor (M) and transmitting the rotational power of the electric motor (M) to a ball screw mechanism (7) for converting the rotational motion of the electric motor (M) to the axial linear motion of a driving shaft (6);
the ball screw mechanism (7) comprising:
a nut (18) formed with a helical screw groove (18a) on its inner circumference and supported by rolling bearings (20 and 20) mounted on the housing (2) rotationally but axially immovably; and
a screw shaft (10) coaxially integrated with the driving shaft (6), formed with helical screw groove (10a) on its outer circumference corresponding to the helical screw groove (18a) of the nut (18), inserted into the nut (18) via numerous balls (17), and supported axially movably but not rotationally relative to the housing (2),
wherein the housing (2) comprises a first housing (2a) on which the electric motor (M) is mounted and a second housing (2b) to be abutted against an end face of the first housing (2a),
wherein the first housing (2a) is formed with a cylindrical gear containing portion (24) for containing the speed reduction mechanism (5), the cylindrical gear containing portion (24) encircling the electric motor shaft (M/S) and the speed reduction mechanism (5),
wherein part of an end of the gear containing portion (24) of the first housing (2a) extends radially inward to form a bottom portion (25) for covering the speed reduction mechanism (5), and
wherein the bottom portion (25) of the first housing (2a) and the second housing (2b) are formed with abutment surfaces (21 and 22) respectively for abutting against each other,
**characterized in that**
each of the abutment surfaces (21 and 22) respectively of the first and second housings (2a and 2b) is formed to have a circular configuration, and **in that** the housing (2) is a two-piece housing (2) formed by the first and second housings (2a and 2b).

2. An electric linear actuator (1) of claim 1 wherein at least one of the abutment surfaces (21 and/or 22) of the first and second housings (2a and/or 2b) is formed with an annular sealing groove (22a), and wherein a sealing member (28 or 29) is interposed between the abutment surfaces (21 and 22) of the housing (2).

3. An electric linear actuator (1) of claim 2 wherein the sealing member (28 or 29) is a liquid gasket formed of curable material.

4. An electric linear actuator of claim 2 wherein the sealing member (29) is an O-ring.

5. An electric linear actuator of claim 1 or 3 wherein the first housing (2a) and the second housing (2b) are united each other by a plurality of fastening bolts (9), wherein a plurality of securing portions (23) formed with bolt apertures (23a) through which the fastening bolts (9) are passed are formed on the housing (2a or 2b) with being partially projected from the periphery of the housing (2a or 2b), and wherein the bolt apertures (23a) are arranged equidistantly along the periphery of the housing (2a or 2b).

6. An electric linear actuator of claim 5 wherein at least the second housing (2b) of the first and second housings (2a and 2b) is formed with ribs (27) each extending over a region from the securing portion (23) to a cylindrical portion (26) of the second housing (2b) for containing the screw shaft (10).

## Patentansprüche

1. Elektrischer Linearantrieb (1), umfassend:
ein Gehäuse (2);
einen an dem Gehäuse (2) montierten Elektromotor (M), wobei der Elektromotor (M) eine Welle (M/S) umfasst; und
einen Drehzahlabsenkungsmechanismus (5) zur Absenkung der Drehzahl des Elektromotors (M) und Übertragung der rotatorischen Leistung des Elektromotors (M) auf einen Kugelgewindemechanismus (7) zur Umwandlung der Drehbewegung des Elektromotors (M) in die axiale Linearbewegung einer Antriebswelle (6);
wobei der Kugelgewindemechanismus (7) umfasst:
eine Mutter (18), die an ihrem Innenumfang mit einer wendelförmigen Schraubnut (18a) ausgebildet ist und von Wälzlagern (20 und 20) gehalten wird, die an dem Gehäuse (2) drehbar jedoch axial unbeweglich montiert sind; und
eine koaxial mit der Antriebswelle (6) integrierte Schneckenwelle (10), die an ihrem Außenumfang gegenüberliegend zu der wendelförmigen Schraubnut (18a) der Mutter (18) mit einer wendelförmigen Schraubnut (10a) ausgebildet ist, über zahlreiche Kugeln (17) in die Mutter (18) eingesetzt ist und axial beweglich,
jedoch nicht drehbar in Bezug auf das Gehäuse (2) gehalten wird,
wobei das Gehäuse (2) ein erstes Gehäuse (2a), an dem der Elektromotor (M) montiert ist, und ein zweites Gehäuse (2b) umfasst, das an einer Stirnseite des ersten Gehäuses (2a) anliegen soll,
wobei das erste Gehäuse (2a) mit einem Stirnrad ausgebildet ist, das ein Teil (24) zur Aufnahme des Drehzahlabsenkungsmechanismus (5) enthält, wobei das Stirnrad ein Teil (24) enthält, der die Welle des Elektromotors (M/S) und den Drehzahlabsenkungsmechanismus (5) umschließt,
wobei sich ein Teil eines Endes des Stirnrads, das ein Teil (24) des ersten Gehäuses (2a) umfasst, radial nach innen erstreckt, um einen unteren Teil (25) zur Abdeckung des Drehzahlabsenkungsmechanismus (5) auszubilden, und
wobei der untere Teil (25) des ersten Gehäuses (2a) und des zweiten Gehäuses (2b) mit Anlageflächen (21 und 22) zum Anliegen aneinander ausgebildet sind,
**dadurch gekennzeichnet, dass**
jede der Anlageflächen (21 und 22) des ersten beziehungsweise zweiten Gehäuses (2a und 2b) so ausgebildet ist, dass sie eine kreisförmige Anordnung aufweist, und dass das Gehäuse (2) ein zweiteiliges Gehäuse (2) ist, das durch das erste und das zweite Gehäuse (2a und 2b) ausgebildet wird.

2. Elektrischer Linearantrieb (1) nach Anspruch 1, wobei mindestens eine der Anlageflächen (21 und/oder 22) des ersten und des zweiten Gehäuses (2a und/oder 2b) mit einer ringförmigen Dichtungsnut (22a) ausgebildet ist, und wobei zwischen den Anlageflächen (21 und 22) des Gehäuses (2) ein Dichtungselement (28 oder 29) eingefügt ist.

3. Elektrischer Linearantrieb (1) nach Anspruch 2, wobei das Dichtungselement (28 oder 29) eine aus aushärtbarem Material gebildete Flüssigdichtung ist.

4. Elektrischer Linearantrieb nach Anspruch 2, wobei das Dichtungselement (29) ein O-Ring ist.

5. Elektrischer Linearantrieb nach Anspruch 1 oder 3, wobei das erste Gehäuse (2a) und das zweite Gehäuse (2b) durch eine Vielzahl von Befestigungsschrauben (9) miteinander verbunden sind, wobei an dem Gehäuse (2a oder 2b) eine Vielzahl von mit Schraubenöffnungen (23a) ausgebildeten Sicherungsabschnitten (23) ausgebildet sind, durch die die Befestigungsschrauben (9) hindurchgeführt sind, die teilweise aus dem Umfang des Gehäuses (2a oder 2b) hervorragen, und wobei die Schraubenöffnungen (23a) in gleichmäßigem Abstand entlang des Umfangs des Gehäuses (2a oder 2b) angeordnet sind.

6. Elektrischer Linearantrieb nach Anspruch 5, wobei mindestens das zweite Gehäuse (2b) von dem ersten und dem zweiten Gehäuse (2a und 2b) mit Rippen (27) ausgebildet ist, die sich jeweils über einen Bereich von dem Sicherungsabschnitt (23) bis zu einem zylindrischen Teil (26) des zweiten Gehäuses (2b) erstrecken, um die Schneckenwelle (10) zu umfassen.

## Revendications

1. Actionneur linéaire électrique (1) comprenant :
un carter (2) ;
un moteur électrique (M) monté sur le carter (2), le moteur électrique (M) comprenant un arbre (M/S) ; et
un mécanisme de réduction de la vitesse (5) pour réduire la vitesse de rotation du moteur électrique (M) et transmettre la puissance de rotation du moteur électrique (M) à un mécanisme de vis à bille (7) pour convertir le mouvement de rotation du moteur électrique (M) en mouvement linéaire axial d'un arbre d'entraînement (6) ;
le mécanisme de vis à bille (7) comprenant :
un écrou (18) formé avec une rainure de vis hélicoïdale (18a) sur sa circonférence interne et supporté par des paliers (20 et 20) montés sur le carter (2) de manière rotative mais inamovible axialement ; et
un arbre de vis (10) coaxialement intégré à l'arbre d'entraînement (6), formé par la rainure de vis hélicoïdale (10a) sur sa circonférence externe correspondant à la rainure de vis hélicoïdale (18a) de l'écrou (18), inséré dans l'écrou (18) par l'intermédiaire de nombreuses billes (17), et supporté de manière mobile axialement mais non rotative par rapport au carter (2),
dans lequel le carter (2) comprend un premier carter (2a) sur lequel le moteur électrique (M) est monté et un second carter (2b) devant être en appui contre une face d'extrémité du premier carter (2a),
dans lequel le premier carter (2a) est formé avec un engrenage cylindrique contenant une partie (24) pour contenir le mécanisme de réduction de la vitesse (5), l'engrenage cylindrique contenant une partie (24) entourant l'arbre du moteur électrique (M/S) et le mécanisme de réduction de la vitesse (5),
dans lequel une partie d'une extrémité de l'engrenage contenant la partie (24) du premier carter (2a) s'étend radialement vers l'intérieur pour former une partie inférieure (25) pour couvrir le mécanisme de réduction de la vitesse (5), et
dans lequel la partie inférieure (25) du premier carter (2a) et le second carter (2b) sont formés avec des surfaces de butée (21 et 22) respectivement pour buter l'une contre l'autre,
**caractérisé en ce que** :
chacune des surfaces de butée (21 et 22) respectivement des premier et second carters (2a et 2b) est formée pour avoir une configuration circulaire, et **en ce que** le carter (2) est un carter en deux parties (2) formé par les premier et second carters (2a et 2b),

2. Actionneur linéaire électrique (1) selon la revendication 1, dans lequel au moins une des surfaces de butée (21 et/ou 22) des premier et second carters (2a et/ou 2b) est formée avec une rainure d'étanchéité annulaire (22a), et dans lequel un élément d'étanchéité (28 ou 29) est interposé entre les surfaces de butée (21 et 22) du carter (2).

3. Actionneur linéaire électrique (1) selon la revendication 2, dans lequel l'élément d'étanchéité (28 ou 29) est un joint liquide formé d'un matériau durcissable.

4. Actionneur linéaire électrique selon la revendication 2, dans lequel l'élément d'étanchéité (29) est un joint torique.

5. Actionneur linéaire électrique selon la revendication 1 ou 3, dans lequel le premier carter (2a) et le second carter (2b) sont unis entre eux par une pluralité de boulons de fixation (9), dans lequel une pluralité de parties de fixation (23) formées avec des ouvertures de boulon (23a) à travers lesquelles passent les boulons de fixation (9) sont formées sur le carter (2a ou 2b) en faisant partiellement saillie à partir de la périphérie du carter (2a ou 2b), et dans lequel les ouvertures de boulon (23a) sont disposées de manière équidistante le long de la périphérie du carter (2a ou 2b).

6. Actionneur linéaire électrique selon la revendication 5, dans lequel au moins le second carter (2b) des premier et second carters (2a et 2b) est formé avec des nervures (27) s'étendant chacune sur une région allant de la partie de fixation (23) à une partie cylindrique (26) du second carter (2b) pour contenir l'arbre de vis (10).
